# EUROPEAN PATENT APPLICATION

(11) **EP 4 456 510 A1**
(43) Date of publication of application: **30.10.2024**
(21) Application number: 23742854.5
(22) Date of filing: 16.01.2023
(51) Int. Cl.: H04L 65/1066

(54) **MESSAGE SENDING METHOD AND APPARATUS, ELECTRONIC DEVICE, STORAGE MEDIUM AND PROGRAM PRODUCT**

(30) Priority: 19.01.2022 CN 202210060996
(71) Applicant: Beijing Zitiao Network Technology Co., Ltd., Beijing 100190 (CN)
(72) Inventor: WAN, Shiqi, Beijing 100086 (CN); ZHAO, Yuxuan, Beijing 100086 (CN)
(74) Representative: Dentons UK and Middle East LLP
(86) International application number: PCT/CN2023/072409
(87) International publication number: WO 2023/138539

(57) **Abstract**

The disclosure provides a message sending method and apparatus, an electronic device, a storage medium, and a program product. The message sending method includes: receiving an interaction picture sending operation on a current session interface; determining at least one preset interaction picture from a target picture set as a target interaction picture in response to the interaction picture sending operation, wherein the target picture set is obtained by matching based on the interaction picture sending operation; and sending the target interaction picture as a session message to at least one second user, and displaying the target interaction picture on the current session interface.

## Description

### CROSS-REFERENCE TO RELATED APPLICATION(S)

The present application claims the right of priority to Chinese patent application No. 202210060996.X, filed with the Chinese Patent Office on January 19, 2022, which is incorporated in its entirety herein by reference.

### FIELD

The disclosure relates to the technical field of computers, in particular to a method and apparatus for sending message, an electronic device, a storage medium, and a program product.

### BACKGROUND

Users can send emoji pictures as session messages in the session interface, for example, users can select an emoji picture in the emoji panel to send.

### SUMMARY

The disclosure provides a method and apparatus for sending a message, an electronic device, a storage medium, and a program product, so as to simplify a process for sending an interaction picture.

Examples of the disclosure provide a message sending method. The method includes:
receiving an interaction picture sending operation on a current session interface;
determining at least one preset interaction picture from a target picture set as a target interaction picture in response to the interaction picture sending operation, wherein the target picture set is obtained by matching based on the interaction picture sending operation; and
sending the target interaction picture as a session message to at least one second user, and displaying the target interaction picture on the current session interface.

The examples of the disclosure further provide an apparatus for sending a message. The apparatus includes:
an operation reception module configured to receive an interaction picture sending operation on a current session interface;
a picture selection module configured to determine at least one preset interaction picture from a target picture set as a target interaction picture in response to the interaction picture sending operation, wherein the target picture set is obtained by matching based on the interaction picture sending operation; and
a picture sending module configured to send the target interaction picture as a session message to at least one second user, and display the target interaction picture on the current session interface.

The examples of the disclosure further provide an electronic device. The electronic device includes:
one or more processors; and
a memory configured to store one or more programs, wherein
when executed by the one or more processors, the one or more programs cause the one or more processors to implement the message sending method according to the examples of the disclosure.

The examples of the disclosure further provide a computer-readable storage medium, storing a computer program. The computer program implements the message sending method according to the examples of the disclosure when executed by a processor.

The examples of the disclosure further provide a computer program product. When executed by a computer, the computer program product causes the computer to implement the message sending method according to the examples of the disclosure.

### BRIEF DESCRIPTION OF THE DRAWINGS

FIG. 1 is a schematic flowchart of a message sending method according to an example of the disclosure;
FIG. 2 is a schematic diagram of displaying a session interface according to an example of the disclosure;
FIG. 3 is a schematic flowchart of another message sending method according to an example of the disclosure;
FIG. 4 is a schematic diagram of displaying another session interface according to an example of the disclosure;
FIG. 5 is a schematic diagram of an interaction panel according to an example of the disclosure;
FIG. 6 is a structural block diagram of an apparatus for sending a message according to an example of the disclosure; and
FIG. 7 is a schematic structural diagram of an electronic device according to an example of the disclosure.

### DETAILED DESCRIPTION OF EMBODIMENTS

Examples of the disclosure are described below with reference to the drawings. Although some examples of the disclosure are shown in the drawings, the disclosure may be embodied in various forms and should not be construed as being limited to the examples set forth herein. On the contrary, these examples are provided, such that the disclosure will be understood. The drawings and examples of the disclosure are for illustrative purposes merely and are not intended to limit the scope of protection of the disclosure.

Various steps recited in the method embodiments of the disclosure can be performed in different orders and/or in parallel. Furthermore, the method embodiments can include additional steps and/or omit to execute the illustrated steps. The scope of the disclosure is not limited in this respect.

As used herein, the term "comprise" or "include" and their variations are open-ended, that is, "comprise but not limited to" and "include but not limited to". The term "based on" is "based at least in part on". The term "an example" means "at least one example". The term "another example" means "at least one further example". The term "some examples" means "at least some examples". Definitions for other terms are given in the description below.

Concepts such as "first" and "second" mentioned in the disclosure are merely used to distinguish different apparatuses, modules or units, and are not used to limit the order of functions executed by these apparatuses, modules or units or their interdependence.

The modification with "a", "an" or "a plurality of" in the disclosure is intended to be illustrative rather than limitative, and should be understood as "one or more" unless the context dictates otherwise.

The names of messages or information exchanged between a plurality of apparatuses in the embodiments of the disclosure are merely for illustrative purposes, and are not intended to limit the scope of these messages or information.

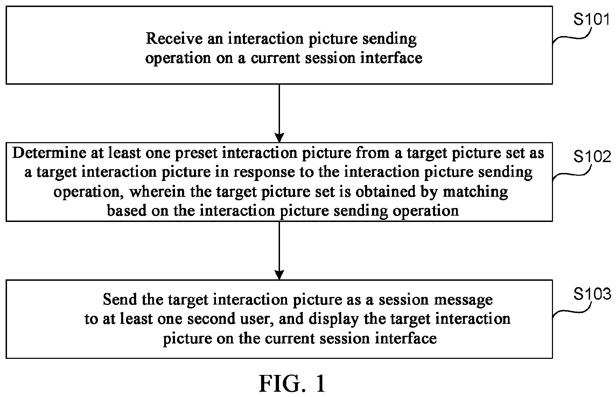

FIG. 1 is a schematic flowchart of a message sending method according to an example of the disclosure. The method may be executed by an apparatus for sending a message. The apparatus may be implemented by software and/or hardware, may be configured in an electronic device, and may be configured in a mobile phone or tablet computer. The message sending method provided in the example of the disclosure is applicable to scenarios wherein interaction pictures are sent. As shown in FIG. 1, the message sending method provided in the example may include the following steps.

S101. An interaction picture sending operation on a current session interface is received.

The current session interface may be a currently displayed session interface. The interaction picture sending operation may be a trigger operation of sending an interaction picture as a session message in the current session interface, such as an operation of triggering an interaction picture sending control displayed in the current interface. The interaction picture may be, for example, an emoji picture selected by a first user, and may include a static picture and a dynamic picture.

When the user is to send an interaction picture in the current session interface, the user can trigger the interaction picture sending control. Accordingly, when detecting that the user triggers the interaction picture sending control in the current session interface, the electronic device may determine that the interaction picture sending operation is received in the current session interface.

In an embodiment, the step of receiving an interaction picture sending operation on a current session interface includes: receive the interaction picture sending operation acting on an interaction picture sending control displayed in the current session interface. Before receiving the interaction picture sending operation on the current session interface, the step of receiving an interaction picture sending operation on a current session interface further includes: display, the interaction picture sending control in the current session interface when a first user and/or the at least one second user satisfies a first preset condition.

The interaction picture sending control may be configured to instruct the electronic device to automatically select and send at least one interaction picture. The interaction picture sending control may be displayed in the current session interface when the first user or at least one second user in a current session satisfies the first preset condition. The current session may be a session displayed in the current session interface, and the current session may include the first user and one or more second users. Accordingly, the current session interface may be a single session interface of the first user and one second user, or a session interface of a group of the first user and a plurality of second users. The first user may be a user who triggers the interaction picture sending control in the current session. The second user may be a user in a process that the first user sends the target interaction picture to the second user in the current session, such as a user other than the first user in the current session. The first preset condition may be a preset display condition of the interaction picture sending control, which may be set according to needs. The a first user and/or the at least one second user satisfies a first preset condition includes: the at least one second user sends the interaction picture message, and the interaction picture message sent by the second user is displayed on the currently displayed session interface. For example, the first preset condition may be set as that a sending time of a last session message/interaction picture sent in the current session is less than a preset time threshold, alternatively, at least one interaction picture sent by the second user is displayed in the current session interface at the current moment, or, the first user and at least one second user are online within a preset time. The first preset condition may also be set to a combination of any of the above conditions.

Illustratively, the electronic device may display the interaction picture sending control in the current session interface when the first user and/or at least one second user in the current session satisfy the first preset condition. Therefore, when the first user is to send an interaction picture, the user can trigger the interaction picture sending control. Accordingly, when detecting that the first user triggers the interaction picture sending control displayed on the current interface, the electronic device may determine that the interaction picture sending operation is received.

In the above embodiments, a display position of the interaction picture sending control in the current interface may be flexibly set, for example, the interaction picture sending control may be displayed in a message display area of the current session interface. In this case, the step of displaying the interaction picture sending control in the current session interface may include: determine a target session message in the current session interface, wherein the target session message satisfies a second preset condition; and display the interaction picture sending control at a target associated position of a display position of the target session message.

The target session message may be a session message displayed in the current session interface and satisfying the second preset condition. The second preset condition may be set according to needs. The target session message satisfies a second preset condition may include: the target session message is a last interaction picture message sent by the second user in the currently displayed session interface; and/or the target session message is an interaction picture message sent by the second user and displayed at a preset position in the currently displayed session interface. Accordingly, the target session message may be the last interaction picture message sent by the second user in the currently displayed session interface, that is, the target session message may be the last interaction picture message displayed in the current session interface at the current moment and sent by the second user, and/or the interaction picture message displayed in the preset position of the current session interface at the current moment and sent by the second user. The interaction picture message may be a session message including an interaction picture. The preset position may be a position preset in the message display area of the current session interface, such as a top position, a bottom position, or a middle position of the message display area, which is not limited herein. The target associated position may be a position associated with the display position of the target session message in the current session interface, for example, the target associated position may be located inside or outside the display position of the target session message, and/or located at an upper side, a lower side, a left side or a right side of the display position of the target session message.

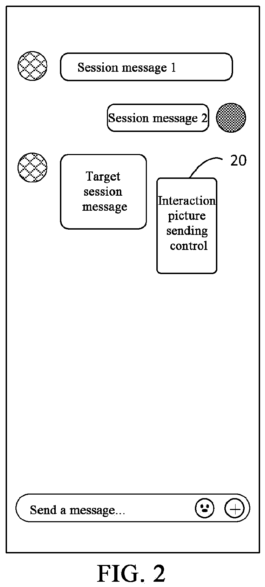

When displaying the current session interface, the electronic device may periodically determine whether the first user and/or the at least one second user in the current session satisfy the first preset condition, and whether a target session message satisfying the second preset condition is displayed in the current session interface at the current moment. In a case that the first user and/or the at least one second user in the current session satisfy the first preset condition, and the target session message satisfying the second preset condition is displayed in the current session interface at the current moment, the interaction picture sending control 20 is displayed at the target associated position of the display position of the target session message. For example, when the last interaction picture message sent by the second user is displayed in the message display area of the current session interface, the electronic device may display the interaction picture sending control 20 on the right side of the last interaction picture message, as shown in FIG. 2.

In another embodiment, an interaction picture sending control may also be displayed in the interaction panel. In this case, the step of displaying the interaction picture sending control in the current session interface may include: display an interaction panel in the current session interface, wherein the interaction panel displays the interaction picture sending control and the preset interaction picture.

In order to improve interaction effect, in the example, the interaction picture sending control may be displayed only when the first user receives the target session message sent by the at least one second user, so as to improve simplicity of the current session interface on the premise of satisfying interaction picture sending requirement of the first user. In this case, optionally, the first user and/or the at least one second user satisfies a first preset condition includes: the at least one second user sends the interaction picture message, and displays the interaction picture message on the session interface. Alternatively, the a first user and/or the at least one second user satisfies a first preset condition includes: the first user and the at least one second user are online within a preset time; and the at least one second user sends the interaction picture message, and the interaction picture message sent by the second user is displayed on the currently displayed session interface. That is, regardless of whether the first user is online and whether an online second user exists in the current session, when the last interaction picture message sent by the second user is displayed in the current session interface, the interaction picture sending control is displayed in the current session interface. For example, it may be considered whether the first user is online within the preset time and whether an online second user exists in the current session within the preset time, and only when the first user is online within the preset time, at least one online second user exists in the current session within the preset time, and the last interaction picture message sent by the second user is displayed in the current session interface, the interaction picture sending control is displayed in the current session interface. Here, the preset time can be flexibly set, for example, the preset time can be set to a time length, such as 1 minute or 5 minutes.

S102. At least one preset interaction picture from a target picture set is determined as a target interaction picture in response to the interaction picture sending operation, wherein the target picture set is obtained by matching based on the interaction picture sending operation.

The target picture set may be a picture set obtained by matching based on the interaction picture sending operation, for example, may be a target picture set obtained by matching based on the target session message. In this case, the target picture set is obtained by matching based on the interaction picture sending operation may include: the target picture set being obtained by matching based on the target session message satisfying the second preset condition. For example, preset interaction pictures having a correlation with the target session message greater than or equal to a preset correlation threshold may be selected to form the target picture set. Alternatively, at least one preset interaction picture may be sorted based on the correlation with the target session message, and the first n (n is a positive integer) preset interaction pictures may be selected to form the target picture set. The target interaction picture may be an interaction picture sent in response to the interaction picture sending operation.

When the interaction picture sending operation is received, the target picture set may be obtained by matching based on the interaction picture sending operation, and at least one preset interaction picture in the target picture set may be selected as the target interaction picture. For example, at least one preset interaction picture may be randomly selected from the target picture set as the target interaction picture. An interaction picture in the target picture set that has the highest correlation with the target session message may also be selected as the target interaction picture, alternatively, an interaction picture in the target picture set that has not been sent by the first user in the current session interface and has the highest correlation with the target session message may be selected as the target interaction picture, and so on.

S103.The target interaction picture is sent as a session message to at least one second user, and the target interaction picture is displayed on the current session interface.

In the example, when the user executes the interaction picture sending operation, one interaction picture can be automatically selected from the target picture set and sent, the user does not need to browse at least one preset interaction picture and select a preset interaction picture to be sent from the preset interaction picture, which can simplify an operation required for the user to send the interaction picture and improve interaction effect.

After the target interaction picture is determined, the target interaction picture may be sent as a session message in the current session. That is to say, the target interaction picture may be sent as a session message to at least one second user in a current session, and the target interaction picture sent by the first user may be displayed in the current session interface.

The message sending method according to the example includes: receiving an interaction picture sending operation on a current session interface; determining at least one preset interaction picture from a target picture set as a target interaction picture in response to the interaction picture sending operation, wherein the target picture set is obtained by matching based on the interaction picture sending operation; and sending the target interaction picture as a session message to at least one second user, and displaying the target interaction picture on the current session interface. By using the above technical solution, the example can enrich interactive modes of sending interaction pictures by a user and improve interaction effect.

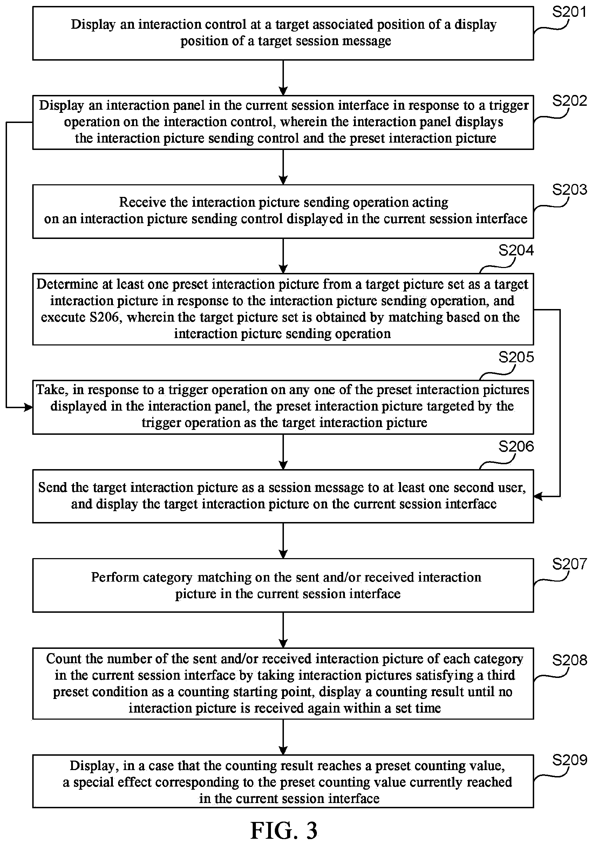

FIG. 3 is a schematic flowchart of another message sending method according to an example of the disclosure. The solutions in the example may be combined with one or more alternatives in the examples described above. Optionally, the step of display an interaction panel in the current session interface includes: display an interaction control at a target associated position of a display position of the target session message; and display the interaction panel in the current session interface in response to a trigger operation on the interaction control.

Optionally, after the interaction panel is displayed in the current session interface, the method further includes: take, in response to a trigger operation on any one of the preset interaction pictures displayed in the interaction panel, the preset interaction picture targeted by the trigger operation as the target interaction picture.

Optionally, after the target interaction picture is sent as a session message to at least one second user, the method further includes: perform category matching on the sent and/or received interaction picture in the current session interface; and count the number of the sent and/or received interaction picture of each category in the current session interface by taking interaction pictures satisfying a third preset condition as a counting starting point, display a counting result until no more interaction picture is received again within a set time.

Optionally, the message sending method provided in the example further includes: display, when the counting result reaches a preset counting value, an effect corresponding to the preset counting value currently reached in the current session interface.

As shown in FIG. 3, the message sending method provided in the example may include the following steps.

S201. An interaction control is displayed at a target associated position of a display position of the target session message.

In the example, an interaction picture sending control may also be displayed in the interaction panel.

The interaction panel can display all the preset interaction pictures or only preset interaction pictures in the target picture set. The interaction control may be configured to instruct the electronic device to display the interaction panel.

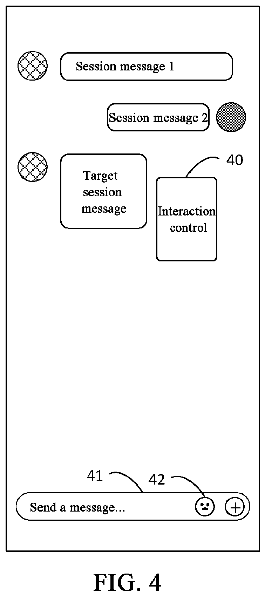

When the target session message is displayed in the current session interface, the interaction control 40 may be displayed at the target associated position of the display position of the target session message. For example, when the interaction picture message sent by the second user is displayed in the message display area of the current session interface, the last interaction picture message sent by the second user and/or the session message displayed at the preset position of the session message display area may be taken as the target session message, and the interaction control 40 is displayed at the target associated position of the display position of the target session message, as shown in FIG. 4.

S202. An interaction panel is displayed in the current session interface in response to a trigger operation on the interaction control, and execute S203 or S205, wherein the interaction panel displays the interaction picture sending control and the preset interaction picture.

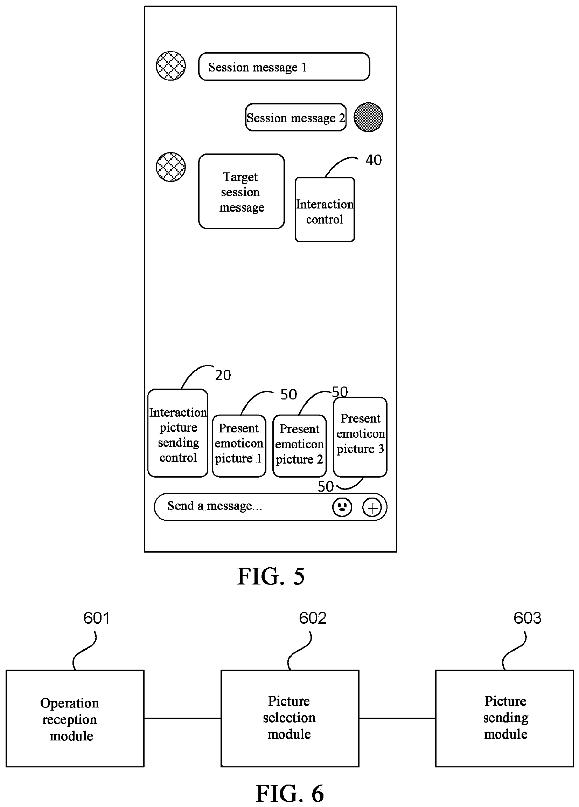

As shown in FIG. 4, the electronic device displays the interaction control 40 at the target associated position of the display position of the target session message. Thus, when the first user is to view the interaction panel, the interaction control 40 can be triggered. Accordingly, when detecting that the first user triggers the interaction control 40 displayed in the message display area of the current session interface, the electronic device may display the interaction panel, and display the interaction picture sending control 20 and the preset interaction picture 50 in the interaction panel, as shown in FIG. 5.

In the example, a manner for displaying the preset interaction picture in the interaction panel may be set according to needs. For example, the preset interaction pictures are randomly arranged in the interaction panel. Alternatively, the preset interaction pictures may also be arranged in the interaction panel according to a correlation degree with a target session message, wherein the target session message satisfies a second preset condition.

As shown in FIG. 4, in the example, besides displaying the interaction control 40 in the message display area, an emoji control 42 may also be displayed in, for example, a message input area 41 outside the message display area. Triggering the emoji control 42 may instruct the electronic device to display an emoji window. The emoji picture displayed in the emoji window may include the interaction picture displayed in the interaction panel or not, and may include an emoji picture not displayed in the interaction panel. In other words, the interaction control displayed at a position associated with the display position of the target session message in the example is not the emoji control 42 displayed outside the message display area, but has different functions from that of the emoji control 42 displayed outside the message display area.

S203. The interaction picture sending operation acting on an interaction picture sending control displayed in the current session interface is received.

S204. At least one preset interaction picture from a target picture set is determined as a target interaction picture in response to the interaction picture sending operation, and execute S206, wherein the target picture set is obtained by matching based on the interaction picture sending operation.

S205. The preset interaction picture targeted by the trigger operation is taken as the target interaction picture in response to a trigger operation on any one of the preset interaction pictures displayed in the interaction panel.

S206. The target interaction picture is sent as a session message to at least one second user, and display the target interaction picture on the current session interface.

In the example, the first user may instruct the electronic device to automatically select at least one interaction picture as the target interaction picture and send the target interaction picture by triggering the interaction picture sending control displayed in the interaction panel, and may also select an interaction picture to be sent by the first user in the interaction panel and send the interaction picture.

The first user can browse at least one preset interaction picture displayed in the interaction panel and trigger the preset interaction picture in the interaction panel when the first user is to send a preset interaction picture in the current session interface. Accordingly, when detecting that the first user triggers a preset interaction picture displayed in the interaction panel, the electronic device may take the preset interaction picture as the target interaction picture, send the target interaction picture as a session message to at least one second user in the current session, and display the target interaction picture in the message display area of the current session interface.

In the example, after the target interaction picture is sent, the interaction panel may be closed, or the interaction panel may remain displayed, which is not limited in the example.

In an embodiment, after the target interaction picture is sent as a session message to at least one second user, the method further includes: keep displaying the interaction panel; and update the preset interaction picture displayed in the interaction panel in response to a picture updating operation.

In the above embodiment, the electronic device may update the preset interaction picture displayed in the interaction panel based on the picture updating operation by the first user.

The electronic device may keep displaying the interaction panel after sending the target interaction picture until receiving a trigger operation for closing the interaction panel, such as receiving a trigger operation on a close control over the interaction panel and/or receiving a trigger operation (for example, a click operation) acting on a blank area of the current session interface. Therefore, when the interaction panel is in a display state, the first user can execute the picture update operation when the preset interaction picture displayed in the interaction panel is to be updated. Accordingly, when detecting the picture update operation by the first user, the electronic device may update the preset interaction pictures displayed in the interaction panel, for example, randomly select a certain number of preset interaction pictures that are not displayed in the interaction panel, alternatively, select a certain number of preset interaction pictures that are not displayed in the interaction panel according to an order of correlation with the target session message from high to low, and update the preset interaction picture displayed in the interaction panel to the preset interaction picture selected this time.

Optionally, the step of updating the preset interaction picture displayed in the interaction panel in response to a picture updating operation includes at least one of the following: update the current preset interaction picture displayed in the interaction panel to a first preset interaction picture in response to the interaction picture sending operation; update a current preset interaction picture displayed in the interaction panel to a second preset interaction picture in response to a trigger operation on a picture update control; and update the current preset interaction picture displayed in the interaction panel to a third preset interaction picture matching a target text input by the first user in response to a text input operation.

The first preset interaction picture/the second preset interaction picture may be preset interaction pictures determined according to the same determination rules or not, for example, the preset interaction pictures are determined randomly or according to the correlation with the target session message. The third preset interaction picture may be a preset interaction picture determined according to a matching degree with text (that is, the target text) input by the first user.

In an embodiment, the electronic device may update the preset interaction picture displayed in the interaction panel based on the interaction picture sending operation by the first user. For example, when the first user is to send an interaction picture, the first user can trigger the interaction picture sending control displayed in the interaction panel. Accordingly, when detecting that the first user triggers the interaction picture sending control, the electronic device may determine at least one preset interaction picture from the target picture set as a target interaction picture, send the target interaction picture as a session message to at least one second user, display the target interaction picture in the current session interface, and update the current preset interaction picture displayed in the interaction panel to the first preset interaction picture.

In another embodiment, the electronic device may update the preset interaction picture displayed in the interaction panel based on the trigger operation on the picture update control by the first user. For example, when the first user is to update the preset interaction picture displayed in the interaction panel, the first user may trigger the picture update control in the interaction panel. Accordingly, when detecting that the first user triggers the picture update control displayed in the interaction panel, the electronic device may update the current preset interaction picture displayed in the interaction panel to the second preset interaction picture.

In the embodiment, the picture update control may be fixedly displayed in the interaction panel, and may also be displayed when the target session message changes and the interaction panel is in the display state. In this case, optionally, before the current preset interaction picture displayed in the interaction panel is updated to the second preset interaction picture in response to the trigger operation on the picture update control, the method further includes: display the picture update control in the interaction panel when the interaction panel is displayed; or, display the picture update control in the interaction panel when the target session message changes and the interaction panel is in a display state.

In yet another embodiment, the electronic device may update the preset interaction picture displayed in the interaction panel based on the text input operation by the first user. For example, the first user may input text into the message input area to send a session message including text and/or conduct an interactive image search. Accordingly, the electronic device may input text (that is, the target text) into the message input area based on the text input operation by the first user, obtain the third preset interaction picture matching the target text, for example, obtain a preset interaction picture including text matching the target text (that is, a preset picture including the target text or a preset interaction picture including text having the same or similar meaning to the target text), and/or obtain a preset interaction picture expressing the same or similar emotion to the emotion expressed by the target text as the third preset interaction picture, and update the current preset interaction picture displayed in the interaction panel to the third preset interaction picture.

S207. Perform category matching on the sent and/or received interaction picture in the current session interface.

The sent and/or received interaction pictures in the current session interface may be classified according to preset classification rules, for example, the sent and/or received interaction pictures in the current session interface may be classified according to different emotions (such as happy, sad, appreciative, mocking, etc.) expressed by the interaction pictures.

S208. Count the number of the sent and/or received interaction picture of each category in the current session interface by taking interaction pictures satisfying a third preset condition as a counting starting point, display a counting result until no more interaction picture is received again within a set time.

The interaction picture satisfying the third preset condition may be an interaction picture sent based on an interaction picture sending operation or an operation on a preset interaction picture displayed in the interaction panel by the first user without counting, or may be an interaction picture included in a target session message when the user triggers the interaction picture sending operation or instructs the electronic device to display the interaction panel without counting, which is not limited herein. The set time can be set by a developer in advance, for example, the set time can be set to a time length such as 5s or 10s.

An interaction picture satisfying the third preset condition in the current session may be taken as a counting starting point, sent and/or received interaction pictures of each category in the current session interface may be counted separately according to the order of sending time from being early to being late. A counting result may be displayed in the current session interface. In a counting process, it is periodically determined that whether an interaction picture sent as a session message is sent and/or received again within a preset time since the latest interaction picture is displayed in the current session interface. In a case that an interaction picture sent as a session message is sent and/or received again, the interaction picture sent and/or received again is regarded as a latest interaction picture. In a case that an interaction picture sent as a session message is not sent and/or received again, counting is stopped.

S209. When the counting result reaches a preset counting value, an effect corresponding to the preset counting value currently reached is displayed in the current session interface.

In the example, a plurality of preset counting values may be preset. In the counting process, for each category, when a counting result of the category reaches any preset counting value, an effect corresponding to the preset counting value currently reached is displayed in the current session interface, so as to enrich a display form of the interaction picture. The plurality of preset counting values can be set according to needs. For example, the preset counting value can be set to be 10, 20, 30, or 40. For the same preset counting value, effects displayed when the counting results of different categories reach the preset counting value can be the same or not. The effect can be a full-screen effect, for example, the effect corresponding to the preset counting value currently reached can be displayed on an upper layer of a plurality of session messages displayed in the current session interface.

In the message sending method provided in the example, the interaction picture sending control and the preset interaction picture are displayed in the interaction panel. The sent and/or received interaction pictures in the current session interface are counted according to categories, the counting results are displayed, and when the counting results reach any preset counting value, the effect corresponding to the preset counting value is displayed in the current session interface, which can satisfy different interaction picture sending requirements of users, enrich display forms of the interaction pictures, and improve interaction effect.

FIG. 6 is a structural block diagram of an apparatus for sending a message according to an example of the disclosure. The apparatus may be implemented by software and/or hardware, may be configured in an electronic device, may be configured in a mobile phone or tablet computer, and may send interaction pictures as session message by executing the message sending method. As shown in FIG. 6, the apparatus for sending a message provided in the example may include an operation reception module 601, a picture selection module 602, and a picture sending module 603.

The operation reception module 601 is configured to receive an interaction picture sending operation on a current session interface.

The picture selection module 602 is configured to determine at least one preset interaction picture from a target picture set as a target interaction picture in response to the interaction picture sending operation, wherein the target picture set is obtained by matching based on the interaction picture sending operation.

The picture sending module 603 is configured to send the target interaction picture as a session message to at least one second user, and display the target interaction picture on the current session interface.

According to the apparatus for sending a message provided in the example of the disclosure, the operation reception module 601 receives an interaction picture sending operation on a current session interface; the picture selection module 602 determines at least one preset interaction picture from a target picture set as a target interaction picture in response to the interaction picture sending operation, wherein the target picture set is obtained by matching based on the interaction picture sending operation; and the picture sending module 603 sends the target interaction picture as a session message to at least one second user, and displays the target interaction picture on the current session interface. By using the above technical solution, the example can enrich interactive modes of sending interaction pictures by a user and improve interaction effect.

In the above solution, the operation reception module 601 may be configured to receive the interaction picture sending operation acting on an interaction picture sending control displayed in the current session interface. The apparatus for sending a message provided in the example may further includes: a sending control display module configured to display, before receiving the interaction picture sending operation on the current session interface, the interaction picture sending control in the current session interface when a first user and/or the at least one second user satisfies a first preset condition.

In the above solution, the sending control display module may be configured to: determine a target session message in the current session interface, wherein the target session message satisfies a second preset condition; and display the interaction picture sending control at a target associated position of a display position of the target session message.

In the above solution, the sending control display module may be configured to: display an interaction panel in the current session interface, wherein the interaction panel displays the interaction picture sending control and the preset interaction picture.

In the above solution, the preset interaction pictures may be randomly arranged in the interaction panel; or, the preset interaction pictures may be arranged in the interaction panel according to a correlation degree with a target session message, wherein the target session message satisfies a second preset condition.

In the above solution, the sending control display module may be configured to: display an interaction control at a target associated position of a display position of the target session message; and display the interaction panel in the current session interface in response to a trigger operation on the interaction control.

The apparatus for sending a message provided in the example may further include: a trigger response module configured to take, in response to a trigger operation on any one of the preset interaction pictures displayed in the interaction panel, the preset interaction picture targeted by the trigger operation as the target interaction picture after the interaction panel is displayed in the current session interface.

In the above solution, the target session message satisfies a second preset condition may include: the target session message is a last interaction picture message sent by the second user in the currently displayed session interface; and/or the target session message is an interaction picture message sent by the second user and displayed at a preset position in the currently displayed session interface.

In the above solution, the target picture set is obtained by matching based on the interaction picture sending operation may include: the target picture set is obtained by matching based on the target session message satisfying the second preset condition.

In the above solution, the first user and/or the at least one second user satisfies a first preset condition may include: the at least one second user sends the interaction picture message, and displays the interaction picture message on the session interface. Alternatively, the a first user and/or the at least one second user satisfies a first preset condition includes: the first user and the at least one second user are online within a preset time; and the at least one second user sends the interaction picture message, and the interaction picture message sent by the second user is displayed on the currently displayed session interface.

The apparatus for sending a message provided in the example may further include: an interaction panel display module configured to keep displaying the interaction panel after the target interaction picture is sent as a session message to at least one second user; and an interaction picture update module configured to update the preset interaction picture displayed in the interaction panel in response to a picture updating operation.

In the above solution, the interaction picture update module may be configured to execute at least one of the following operations: update the current preset interaction picture displayed in the interaction panel to a first preset interaction picture in response to the interaction picture sending operation; update a current preset interaction picture displayed in the interaction panel to a second preset interaction picture in response to a trigger operation on a picture update control; and update the current preset interaction picture displayed in the interaction panel to a third preset interaction picture matching a target text input by the first user in response to a text input operation.

The apparatus for sending a message provided in the example may further include: an update control display module configured to: before the current preset interaction picture displayed in the interaction panel is updated to the second preset interaction picture in response to the trigger operation on the picture update control, display the picture update control in the interaction panel when the interaction panel is displayed; or, display the picture update control in the interaction panel when the target session message changes and the interaction panel is in a display state.

The apparatus for sending a message provided in the example may further include: a category matching module configured to perform category matching on the sent and/or received interaction picture in the current session interface after the target interaction picture is sent as a session message to at least one second user; and a counting module configured to count the number of the sent and/or received interaction picture of each category in the current session interface by taking interaction pictures satisfying a third preset condition as a counting starting point, display a counting result until no more interaction picture is received again within a set time.

The apparatus for sending a message provided in the example may further include: an effect display module configured to display, when the counting result reaches a preset counting value, an effect corresponding to the preset counting value currently reached in the current session interface.

The apparatus for sending a message provided in the example of the disclosure can execute the message sending method provided in any example of the disclosure, and has corresponding functional modules and effects for executing the message sending method. For technical details not described in detail in the example, reference may be made to the methods for sending a message provided in all of the examples of the disclosure.

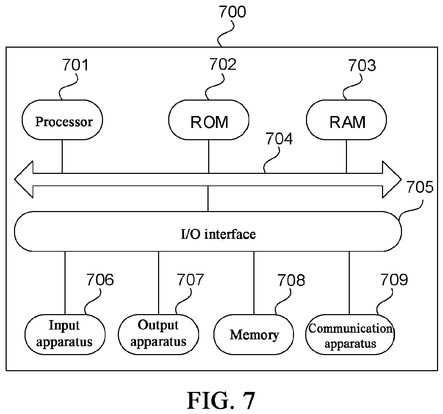

With reference to FIG. 7 below, a schematic structural diagram of an electronic device (for example, a terminal device) 700 suitable for implementing an example of the present disclosure is shown. The terminal device in the example of the disclosure may include a mobile terminal such as a mobile phone, a notebook computer, a digital broadcast receiver, a personal digital assistant (PDA), a portable android device (PAD), a portable multimedia player (PMP), an in-vehicle terminal (for example, an in-vehicle navigation terminal), etc., and a fixed terminal such as a digital television (TV), a desktop computer, etc. The electronic device illustrated in FIG. 7 is merely an instance and should not impose any limitation on the functions and scope of use of the examples of the present disclosure.

As shown in FIG. 7, the electronic device 700 may include a processor (for example, a central processing unit, a graphics processing unit, etc.) 701. The processor 701 may execute a plurality of appropriate actions and processes according to programs stored in a read-only memory (ROM) 702 or programs loaded from a storage apparatus 708 into a random-access memory (RAM) 703. The RAM 703 also stores a plurality of programs and data needed for the operations of the electronic device 700. The processor 701, the ROM 702, and the RAM 703 are connected to each other by means of a bus 704. An input/output (I/O) interface 705 is also connected to the bus 704.

The following apparatuses may be connected to the I/O interface 705: an input apparatus 706 including, for example, a touch screen, a touch pad, a keyboard, a mouse, a camera, a microphone, an accelerometer, a gyroscope, etc.; an output apparatus 707 including, for example, a liquid crystal display (LCD), a speaker, a vibrator, etc.; a memory 708 including, for example, a magnetic tape, a hard disk, etc.; and a communication apparatus 709. The communication apparatus 709 may allow the electronic device 700 to be in wireless or wired communication with other devices to exchange data. While the FIG. 7 illustrates an electronic device 700 having a plurality of apparatuses, not all of the illustrated apparatuses are required to be implemented or provided. More or fewer apparatuses may alternatively be implemented or provided.

According to examples of the disclosure, a processes described above with reference to the flowcharts may be implemented as a computer software program. For example, examples of the disclosure include a computer program product. The computer program product includes a computer program carried on a non-transitory computer-readable medium, and the computer program includes a program code for executing the method illustrated in the flowchart. In such examples, the computer program may be downloaded and installed from a network by means of the communication apparatuses 709, or installed from the storage device 708, or installed from the ROM 702. When executed by the processor 701, the computer program executes the above-described functions defined in the method of the example of the disclosure.

The computer-readable medium in the disclosure may be a computer-readable signal medium or a computer-readable storage medium, or any combination of a computer-readable signal medium and a computer-readable storage medium. The computer-readable storage medium may include an electronic, magnetic, optical, electromagnetic, infrared, or semiconductor system, apparatus, or device, or any combination of the foregoing. The computer-readable storage medium may include an electrical connection based on one or more wires, a portable computer diskette, a hard disk, an RAM, an ROM, an erasable programmable read-only memory (EPROM), a flash memory, an optical fiber, a portable compact disc read-only memory (CD-ROM), an optical storage device, a magnetic storage device, or any suitable combination of the foregoing. In the disclosure, the computer-readable storage medium may be any tangible medium that includes or stores a program for use by or in conjunction with an instruction execution system, apparatus, or device. In the disclosure, the compute-readable signal medium may include a data signal propagating in a baseband or as part of a carry wave and carrying a computer-readable program code. Such a propagated data signal may have a variety of forms and may include an electromagnetic signal, an optical signal, or any suitable combination of the foregoing. The computer-readable signal medium may also be any computer-readable medium besides a computer-readable storage medium. The computer-readable signal medium can send, propagate, or transmit a program for use by or in conjunction with an instruction execution system, apparatus, or device. A program code included on a computer-readable medium may be transmitted by means of any suitable medium, including wires, fiber optic cables, radio frequency (RF), etc., or any suitable combination of the foregoing.

In some embodiments, a client side and a server may communicate by using any currently known or future developed network protocol, such as a hypertext transfer protocol (HTTP), and may be interconnected with any form or medium of digital data communication (for example, a communication network). Instances of communication networks include a local area network (LAN), a wide area network (WAN), Internet work (for example, the Internet), and an end-to-end network (for example, an ad hoc end-to-end network), as well as any currently known or future developed network.

The computer-readable medium may be included in the above electronic device, and may also exist independently without being assembled into the electronic device.

The computer-readable medium carries one or more programs. When the one or more programs are executed by the electronic device, the electronic device is caused to: receive an interaction picture sending operation on a current session interface; determine at least one preset interaction picture from a target picture set as a target interaction picture in response to the interaction picture sending operation, wherein the target picture set is obtained by matching based on the interaction picture sending operation; and send the target interaction picture as a session message to at least one second user, and display the target interaction picture on the current session interface.

A computer program code for performing operations of the disclosure may be written in one or more programming languages, or combinations of the programming languages. The programming languages include object-oriented programming languages, such as Java, Smalltalk, and C++, and further include conventional procedural programming languages, such as the C programming language or similar programming languages. The program code may be executed entirely on a user computer, partly on a user computer, as a stand-alone software package, partly on a user computer and partly on a remote computer, or entirely on a remote computer or server. In the case involving a remote computer, the remote computer may be connected to a user computer through any kind of network, including an LAN or a WAN, or may be connected to an external computer (for example, connected through the Internet by using an Internet service provider).

The flowcharts and block diagrams in the accompanying drawings illustrate the architecture, functionality, and operations possibly implemented by the systems, methods, and computer program products according to the plurality of examples of the disclosure. In this regard, each block in the flowcharts or block diagrams may represent a module, a program segment, or part of a code, and a module, a program segment, or part of a code includes one or more executable instructions for implementing a specified logical function. In some alternative implementations, a function noted in a block may occur in a different order than an order noted in the figures. For example, two consecutive blocks may actually be executed substantially in parallel, or in a reverse order sometimes, depending on a function involved. Each block in the block diagrams and/or flowcharts, and combinations of blocks in the block diagrams and/or flowcharts, can be implemented by special purpose hardware-based systems that perform specified functions or operations, or can be implemented by combinations of special purpose hardware and computer instructions.

The units described in the example of the disclosure may be implemented in software or hardware. The name of a module does not constitute a qualification of the unit itself under a circumstance.

The functions described above herein may be executed at least partially by one or more hardware logic components, for example, exemplary types of hardware logic components that may be used include, field programmable gate arrays (FPGAs), application specific integrated circuits (ASICs), application specific standard parts (ASSPs), systems on chip (SOCs), complex programmable logic devices (CPLDs), etc.

In the context of the disclosure, the machine-readable medium may be a tangible medium that may include or store a program for use by or in conjunction with an instruction execution system, apparatus, or device. The machine-readable medium may be a machine-readable signal medium or a machine-readable storage medium. The machine-readable medium may include an electronic, magnetic, optical, electromagnetic, infrared, or semiconductor system, apparatus, or device, or any suitable combination of the foregoing. The machine-readable storage medium may include an electrical connection based on one or more wires, a portable computer diskette, a hard disk, an RAM, an ROM, an EPROM, a flash memory, an optical fiber, a portable CD-ROM, an optical storage device, a magnetic storage device, or any suitable combination of the foregoing. The storage medium may be a non-transitory storage medium.

According to one or more examples of the disclosure, Instance 1 provides a message sending method. The method includes:
receiving an interaction picture sending operation on a current session interface;
determining at least one preset interaction picture from a target picture set as a target interaction picture in response to the interaction picture sending operation, wherein the target picture set is obtained by matching based on the interaction picture sending operation; and
sending the target interaction picture as a session message to at least one second user, and display the target interaction picture on the current session interface.

According to one or more examples of the disclosure, based on the method in Instance 1, in Instance 2, the step of receiving an interaction picture sending operation on a current session interface includes:
receiving the interaction picture sending operation acting on an interaction picture sending control displayed in the current session interface.

Before the step of receiving an interaction picture sending operation on a current session interface, the method further includes:
displaying the interaction picture sending control in the current session interface when a first user and/or the at least one second user satisfies a first preset condition.

According to one or more examples of the disclosure, based on the method in Instance 2, in Instance 3, the step of displaying the interaction picture sending control in the current session interface includes:
determining a target session message in the current session interface, wherein the target session message satisfies a second preset condition; and
displaying the interaction picture sending control at a target associated position of a display position of the target session message.

According to one or more examples of the disclosure, based on the method in Instance 2, in Instance 4, the step of displaying the interaction picture sending control in the current session interface includes:
displaying an interaction panel in the current session interface, wherein the interaction panel displays the interaction picture sending control and the preset interaction picture.

According to one or more examples of the disclosure, based on the method in Instance 4, in Instance 5, the preset interaction pictures are randomly arranged in the interaction panel; or, the preset interaction pictures are arranged in the interaction panel according to a correlation degree with a target session message, wherein the target session message satisfies a second preset condition.

According to one or more examples of the disclosure, based on the method in Instance 5, in Instance 6, the step of displaying an interaction panel in the current session interface includes:
displaying an interaction control at a target associated position of a display position of the target session message; and
displaying the interaction panel in the current session interface in response to a trigger operation on the interaction control.

According to one or more examples of the disclosure, based on the method in Instance 4, in Instance 7, after the step of displaying an interaction panel in the current session interface, the method further includes:
taking, in response to a trigger operation on any one of the preset interaction pictures displayed in the interaction panel, the preset interaction picture targeted by the trigger operation as the target interaction picture.

According to one or more examples of the disclosure, based on the method in any one of Instance 3 and 5-6, in Instance 8, the second preset condition satisfied by the target session message includes at least one of the following:
the target session message being a last interaction picture message sent by the second user in the currently displayed session interface; and/or
the target session message being an interaction picture message sent by the second user and displayed at a preset position in the currently displayed session interface.

According to one or more examples of the disclosure, based on the method in Instance 8, in Instance 9, the target picture set is obtained by matching based on the interaction picture sending operation includes: the target picture set being obtained by matching based on the target session message satisfying the second preset condition.

According to one or more examples of the disclosure, based on the method in Instance 8, in Instance 10, the first user and/or the at least one second user satisfies a first preset condition includes:
the at least one second user sending the interaction picture message, and displaying the interaction picture message on the session interface; or,
the first user and/or the at least one second user satisfies a first preset condition includes:
the first user and the at least one second user being online within a preset time; and
the at least one second user sending the interaction picture message, and the interaction picture message sent by the second user being displayed on the currently displayed session interface.

According to one or more examples of the disclosure, based on the method in Instances 4-7, in Instance 11, after the sending the target interaction picture as a session message to at least one second user, the method further includes:
keeping displaying the interaction panel; and
updating the preset interaction picture displayed in the interaction panel in response to a picture updating operation.

According to one or more examples of the disclosure, based on the method in Instance 11, in Instance 12, the step of updating the preset interaction picture displayed in the interaction panel in response to a picture updating operation includes at least one of the following:
updating the current preset interaction picture displayed in the interaction panel to a first preset interaction picture in response to the interaction picture sending operation;
updating a current preset interaction picture displayed in the interaction panel to a second preset interaction picture in response to a trigger operation on a picture update control; and
updating the current preset interaction picture displayed in the interaction panel to a third preset interaction picture matching a target text input by the first user in response to a text input operation.

According to one or more examples of the disclosure, based on the method in Instance 12, in Instance 13, before the updating a current preset interaction picture displayed in the interaction panel to a second preset interaction picture in response to a trigger operation on a picture update control, the method further includes:
displaying the picture update control in the interaction panel when the interaction panel is displayed; or,
displaying the picture update control in the interaction panel when the target session message changes and the interaction panel is in a display state.

According to one or more examples of the disclosure, based on the method in Instances 1-7, in Instance 14, after the sending the target interaction picture as a session message to at least one second user, the method further includes:
performing category matching on the sent and/or received interaction picture in the current session interface; and
counting the number of the sent and/or received interaction picture of each category in the current session interface by taking interaction pictures satisfying a third preset condition as a counting starting point, displaying a counting result until no more interaction picture is received again within a set time.

According to one or more examples of the disclosure, based on the method in Instance 14, in Instance 15, the method further includes:
displaying, when the counting result reaches a preset counting value, an effect corresponding to the preset counting value currently reached in the current session interface.

According to one or more examples of the disclosure, Instance 16 provides an apparatus for sending a message. The apparatus includes:
an operation reception module configured to receive an interaction picture sending operation on a current session interface;
a picture selection module configured to determine at least one preset interaction picture from a target picture set as a target interaction picture in response to the interaction picture sending operation, wherein the target picture set is obtained by matching based on the interaction picture sending operation; and
a picture sending module configured to send the target interaction picture as a session message to at least one second user, and display the target interaction picture on the current session interface.

According to one or more examples of the disclosure, Instance 17 provides an electronic device. The electronic device includes:
one or more processors; and
a memory configured to store one or more programs, where
when executed by the one or more processors, the one or more programs cause the one or more processors to implement the message sending method according to any one of Instances 1-15.

According to one or more examples of the disclosure, Instance 18 provides a computer-readable storage medium, storing a computer program. The program implements the message sending method according to any one of Instances 1-15 when executed by a processor.

According to one or more examples of the disclosure, Instance 19 provides a computer program product. When executed by a computer, the computer program product causes the computer to implement the message sending method according to any one of Instances 1-15.

Furthermore, although a plurality of operations is depicted in a particular order, this should not be understood as requiring that such operations be executed in the particular order shown or in a sequential order. In certain circumstances, multitasking and parallel processing may be advantageous. Similarly, although a plurality of implementation details is included in the above discussion, these details should not be construed as limitations on the scope of the disclosure. Some features that are described in the context of separate examples may also be implemented in combination in a single example. Conversely, a plurality of features described in the context of a single example can also be implemented in multiple examples separately or in any suitable sub-combination manner.

Although the subject matter has been described in language specific to structural features and/or methodological logical actions, it should be understood that the subject matter defined in the appended claims is not necessarily limited to the specific features or actions described above. On the contrary, the specific features and actions described above are merely instance forms of implementing the claims.

## Claims

1. A message sending method, applied to a first user side, and comprising:
receiving an interaction picture sending operation on a current session interface;
determining at least one preset interaction picture from a target picture set as a target interaction picture in response to the interaction picture sending operation, wherein the target picture set is obtained by matching based on the interaction picture sending operation; and
sending the target interaction picture as a session message to at least one second user, and displaying the target interaction picture on the current session interface.

2. The method according to claim 1, wherein the receiving the interaction picture sending operation on the current session interface comprises:
receiving the interaction picture sending operation acting on an interaction picture sending control displayed in the current session interface; and
before the receiving an interaction picture sending operation on the current session interface, the method further comprises:
displaying the interaction picture sending control in the current session interface in a case that at least one of a first user or the at least one second user satisfies a first preset condition.

3. The method according to claim 2, wherein the displaying the interaction picture sending control in the current session interface comprises:
determining a target session message in the current session interface, wherein the target session message satisfies a second preset condition; and
displaying the interaction picture sending control at a target associated position of a display position of the target session message.

4. The method according to claim 2, wherein the displaying the interaction picture sending control in the current session interface comprises:
displaying an interaction panel in the current session interface, wherein the interaction panel displays the interaction picture sending control and the preset interaction picture.

5. The method according to claim 4, wherein the preset interaction pictures are randomly arranged in the interaction panel; or, the preset interaction pictures are arranged in the interaction panel according to a correlation degree with a target session message, wherein the target session message satisfies a second preset condition.

6. The method according to claim 5, wherein the displaying the interaction panel in the current session interface comprises:
displaying an interaction control at a target associated position of a display position of the target session message; and
displaying the interaction panel in the current session interface in response to a trigger operation on the interaction control.

7. The method according to claim 4, wherein after the displaying the interaction panel in the current session interface, the method further comprises:
taking, in response to a trigger operation on any one of the preset interaction pictures displayed in the interaction panel, the preset interaction picture targeted by the trigger operation as the target interaction picture.

8. The method according to any one of claim 3 and claims of 5-6, wherein the target session message satisfying the second preset condition comprises at least one of the following:
the target session message being a last interaction picture message sent by the at least one second user in the currently displayed session interface; or
the target session message being an interaction picture message sent by the at least one second user and displayed at a preset position in the currently displayed session interface.

9. The method according to claim 8, wherein the target picture set being obtained by matching based on the interaction picture sending operation comprises: the target picture set being obtained by matching based on the target session message satisfying the second preset condition.

10. The method according to claim 8, wherein at least one of the first user or the at least one second user satisfying the first preset condition comprises:
the at least one second user sending the interaction picture message, and displaying the interaction picture message on the session interface; or
at least one of the first user or the at least one second user satisfying the first preset condition comprises:
the first user and the at least one second user being online within a preset time; and
the at least one second user sending the interaction picture message, and displaying the interaction picture message sent by the second user on the currently displayed session interface.

11. The method according to any one of claims 4-7, wherein after the sending the target interaction picture as the session message to the at least one second user, the method further comprises:
keeping displaying the interaction panel; and
updating the preset interaction picture displayed in the interaction panel in response to a picture updating operation.

12. The method according to claim 11, wherein the updating the preset interaction picture displayed in the interaction panel in response to the picture updating operation comprises at least one of the following:
updating the current preset interaction picture displayed in the interaction panel to a first preset interaction picture in response to the interaction picture sending operation;
updating the current preset interaction picture displayed in the interaction panel to a second preset interaction picture in response to a trigger operation on a picture update control; and
updating the current preset interaction picture displayed in the interaction panel to a third preset interaction picture matching a target text input by the first user in response to a text input operation.

13. The method according to claim 12, wherein before the updating the current preset interaction picture displayed in the interaction panel to the second preset interaction picture in response to the trigger operation on the picture update control, the method further comprises:
displaying the picture update control in the interaction panel in a case that the interaction panel is displayed; or
displaying the picture update control in the interaction panel in a case that the target session message changes and the interaction panel is in a display state.

14. The method according to any one of claims 1-7, wherein after the sending the target interaction picture as the session message to the at least one second user, the method further comprises:
performing category matching on the interaction picture that is sent or received in the current session interface, or, performing category matching on the interaction pictures that are sent and received in the current session interface; and
counting the number of the sent or received interaction picture of each category in the current session interface with an interaction picture satisfying a third preset condition as a counting starting point, and displaying a counting result until no more interaction picture is received within a set time period; or, counting the number of the sent and received interaction pictures of each category in the current session interface with an interaction picture satisfying a third preset condition as a counting starting point and displaying a counting result until no more interaction picture is received within a set time period.

15. The method according to claim 14, further comprising:
displaying, in a case that the counting result reaches a preset counting value, an effect corresponding to the preset counting value currently reached in the current session interface.

16. An apparatus for sending a message, comprising:
an operation reception module, configured to receive an interaction picture sending operation on a current session interface;
a picture selection module, configured to determine at least one preset interaction picture from a target picture set as a target interaction picture in response to the interaction picture sending operation, wherein the target picture set is obtained by matching based on the interaction picture sending operation; and
a picture sending module, configured to send the target interaction picture as a session message to at least one second user, and display the target interaction picture on the current session interface.

17. An electronic device, comprising:
at least one processor; and
a memory configured to store at least one program, wherein
when executed by the at least one processor, the at least one program causes the at least one processor to implement the message sending method according to any one of claims 1-15.

18. A computer-readable storage medium, storing a computer program, wherein the computer program, when executed by a processor, implements the message sending method according to any one of claims 1-15.

19. A computer program product, wherein when executed by a computer, the computer program product causes the computer to implement the message sending method according to any one of claims 1-15.
